(19) Europäisches Patentamt
European Patent Office
Office européen des brevets

(11) EP 0 727 307 A1

(12) **EUROPÄISCHE PATENTANMELDUNG**

(43) Veröffentlichungstag:
21.08.1996 Patentblatt 1996/34

(51) Int. Cl.$^6$: **B32B 27/08**

(21) Anmeldenummer: 96101590.6

(22) Anmeldetag: 05.02.1996

(84) Benannte Vertragsstaaten:
**AT BE CH DE DK ES FR GB IT LI NL SE**

(30) Priorität: **16.02.1995 DE 19505151**

(71) Anmelder: **WOLFF WALSRODE AG**
**D-29655 Walsrode (DE)**

(72) Erfinder:
• **Benkhoff, Hermann**
**D-27356 Rothenburg/Wümme (DE)**

• **Blum, Thomas, Dr.**
**D-27283 Verden/Aller (DE)**

(74) Vertreter: **Braun, Rolf, Dr. et al**
**Bayer AG,**
**Konzernzentrale RP,**
**Patente Konzern**
**51368 Leverkusen (DE)**

(54) **Coestrudierte gereckte Polyolefinfolie**

(57) Die vorliegende Erfindung betrifft eine wenigstens monoaxial gereckte coextrudierte siegelbare Mehrschicht-Polypropylenfolie, mit mindestens einer Außenschicht bestehend aus einer Copolymermasse, die auf Basis von Methylmethacrylat (MA) aufgebaut ist und das Copolymer eine Uneinheitlichkeit von 0,4 bis 2, bevorzugt 0,8 bis 1,6 aufweist.

**Beschreibung**

Diese vorliegende Erfindung betrifft eine mindestens monoaxial gereckte coextrudierte Polyolefin-Mehrschichtfolie, die sich durch verbesserte Oberflächenspannung, hohen Oberflächenglanz und geringer Verkratzbarkeit bei gleichzeitig guter Heißsiegelfähigkeit auszeichnet.

Orientierte Mehrschicht-Polyolefinfolien werden üblicherweise als bedrucktes und unbedrucktes Verpackungsmaterial als Solo- und Verbundfolien eingesetzt. Sie werden aber auch aufgrund ihrer guten Optik in der grafischen Industrie für die Folienkaschierung von Druckerzeugnissen eingesetzt. Verarbeitungsprobleme können sich auf schnellaufenden vertikal und horizontal arbeitenden Verpackungs- und/oder Verarbeitungsmaschinen ergeben. Es ist allgemein bekannt, daß zur Verbesserung der entsprechenden Eigenschaften die Polyolefin-Mehrschichtfolien mit Antistatika, Gleitmittel und Antiblockmittel ausgerüstet werden. Die Forderung nach hohen Siegelnahtfestigkeiten bei gleichzeitig guter Bedruckbarkeit und geringer Oberflächenverkratzbarkeit wird durch auflackierte acrylathaltige Deckschichten erreicht. Hohe Siegelnahtfestigkeiten werden auch durch den Einsatz von Co- und/oder Terpolymeren auf Basis von z.B. Polypropylen/Ethylen, Polypropylen/Buten/Ethylen, Polypropylen/Buten u.a.m. erreicht.

Aus EP 0 237 213 B1 geht hervor, daß die auf eine P/B/E-Terpolymerzwischenschicht auflackierte Deckschicht von einem Mischpolymer abstammt, das durch die Mischpolymerisation von 0 bis 15 Gew.-% einer ungesättigten, $\alpha,\beta$-monoethylenisch ungesättigte Carbonsäure, ausgewählt aus Acrylsäure (AA), Methacrylsäure (MA) und Mischungen davon, mit 85 bis 100 Gew.-% an neutralen Monomerestern erhalten wird. Zur besseren Verbundhaftung zwischen der auflackierten acylathaltigen Deckschicht und der P/B/E-Zwischenschicht wird eine wasserbasierende Kleberschicht aufgebracht.

In EP 0 229 910 B1 wird die Beschichtung von Trägerfolien, die aus kristallinem Polypropylen mit überwiegend isotaktischen Makromolekülen und kristallinen Propylen/Ethylen-Copolymeren, die überwiegend Propylen, sowohl statistisch verteilt als auch blockförmig angeordnet sind, beschrieben. Das heißsiegelfähige Beschichtungsmaterial besteht aus nachfolgender Mischung:

a) 40 bis 70 Gew.-% eines Copolymeres aus 25 bis 40 Gew.-% mindestens eines Alkylacrylats, 70 bis 40 Gew.-% mindestens eines Alkylmethacrylats und 5 bis 20 Gew.-% einer ungesättigten Carbonsäure;

b) 15 bis 30 Gew.-% eines Copolymers aus 50 bis 80 Gew.-% mindestens eines Alkylmethacrylats und/oder Alkyacrylats, 5 bis 30 Gew.-% Styrol oder substituieren Styrolen und 10 bis 20 Gew.-% einer ungesättigten Carbonsäure;

c) 15 bis 30 Gew.-% eines Copolymers aus 99 bis 85 Gew.-% eines Vinylesters und 1 bis 15 Gew.-% eines ungesätittigten, Methylolgruppenenthaltenden Amids.

In EP 0 329 377 A2 wird eine Mehrschicht-Polymerfolie beschrieben, dessen Polymerschicht, bestehend aus 78 Gew.-% Methylmethacrylat (MMA), 19,4 Gew.-% 2-ethylhexylacrylate, 2,6 Gew.-% Acrylsäure (AA) und Antiblockmittel, nach der 4,5 : 1 Längsreckung der corona- bzw. flammbehandelten Polypropylen/Ethylen-Copolymer-Folienschicht abgewandten Polypropylenschicht beschichtet wird. Anschließend wird dieser Mehrschichtfolienaufbau 10 : 1 quergereckt, so daß eine Gesamtdicke von ca. 23,4 µm entsteht und die Außenschichten eine Dicke von ca. 0,8 µm haben.

In EP 0 254 417 wird die Anwendung und Zusammensetzung einer über Emulsionspolymerisation hergestellten Heißsiegelmasse beschrieben, die mit Hilfe einer Polyethylenimin-haltigen Kleberschicht auf eine biaxial orientierte Folie, bestehend aus hochisotaktischem Polypropylen, auflackiert wurde. Die beschriebenen Heißsiegelmassen setzen sich aus Methymethacrylaten (MMA), Methyacrylaten (MA) und Methyacraylsäure (MAA) in unterschiedlichen Konzentrationen zusammen. Für eine gute Maschinengängigkeit wurde den Beschichtungsmassen Antiblockmittel, Gleitmittel und Antistatika zugegeben.

Aus US 4,564,558 und US 4,439,493 geht hervor, daß durch eine coextrudierte Zwischenschicht, bestehend aus P/E-Copolymeren, P/B/E-Terpolymeren oder Gemischen dieser mit Polypropylen der Kernschicht, die Verbundhaftung zwischen der auflackierten Methylacrylat (MA), Methylmethacrylat (MMA) und Methylacrylsäure (MAA)-haltigen Heißsiegelschicht wesentlich verbessert wird.

Im EP 0 255 622 wird eine heißsiegelfähige Mehrschichtfolie aus Polypropylen beschrieben, die zum Erreichen von hohen Siegelnahtfestigkeiten bei niedrigen Siegeltemperaturen ($T_S$ <100°C) mit einer coextrudierten Heißsiegelschicht versehen ist, die dadurch gekennzeichnet ist, daß sie aus einem Polypropylen/Buten-1/Ethylen-Terpolymeren, einem Ethylen/Buten-1-Copolymeren und einem Propylen/Ethylen-Copolymeren zusammengesetzt ist.

In EP 0 302 339 B1, EP-A-27 586, US-A-4 348 457, DE-A-31 14 171, US-A-4 400 428, DE-A-35 17 082, DE-A-35 43 118 und DE-A-32 47 998 werden die Verwendung von siegelbaren olefinischen Mehrschichtfolien als Verpackungen beschrieben, die sich besonders durch gute Siegeleigenschaften im praktischen Gebrauch auszeichnen.

Mit all diesen beschriebenen Folien und den entsprechenden Deckschichtmaterialien werden gute Siegelnahtfestigkeiten, gute Maschinengängigkeit und gute Optik erreicht, aber eine geringe Oberflächenverkratzbarkeit mit hohem Oberflächenglanz kann nur über acrylathaltige Deckschichten,die in einem zusätzlichen Arbeitsschritt auflackiert, aufgerackelt oder über Walzenauftragswerke aufgebracht werden müssen, erreicht werden. Die heißsiegelfähigen Folien mit den coextrudierten polyolefinischen Deckschichten, wie z. B. P/E-Copolymeren, P/B/E-Terpolymeren u. a. m., müssen aufgrund sehr geringer Oberflächenspannung für eine gute Bedruckbarkeit zusätzlich mit z. B. Corona vorbehandelt werden. Die Oberflächen sind aufgrund der relativ weichen Polyolefin-Siegelmassen sehr kratzempfindlich und der Oberflächenglanz ist an den coextrudierten polyolefinischen Deckschichten entsprechend gering.

Es stellt sich daher die Aufgabe, eine Folie mit den Eigenschaften von lackierten, aufgerackelten oder über Walzenauftragswerke aufgebrachten acrylathaltigen Deckschichten mit guten Siegeleigenschaften, hohem Oberflächenglanz, geringer Oberflächenverkratzbarkeit, hoher Oberflächenspannung mit entsprechend guter Maschinengängigkeit im Coextrusionsverfahren herzustellen, die sich besonders als Einzel- und/oder Verbundfolie für die Verarbeitung auf schnellaufenden vertikal und horizontal arbeitenden Verpackungs- und/oder Verarbeitungsmaschinen verschiedenen Typs eignen. Außerdem soll sich die Folie nach konventionellen Verfahren, bei denen mono und/oder biaxial mit Walzen und gegebenenfalls Kluppenrahmen gestreckt wird, problemlos herstellen lassen.

Gelöst wird diese Aufgabe durch eine wenigstens monoaxial gereckte Polypropylen-Mehrschichtfolie, enthaltend jeweils wenigstens ein Gleitmittel, ein Antistatikum, ein Antiblockmittel und mindestens eine Außenschicht, bestehend aus einer Copolymermasse, die dadurch gekennzeichnet ist, daß sie auf Basis von Methylmethacrylat (MMA) und Methylacrylat (MA) aufgebaut ist und einen für die Coextrusion notwendige Uneinheitlichkeit mit entsprechendem Melt Flow Index (MFI) besitzt.

In der bevorzugten Ausführungsform handelt es sich bei der Folie um eine fünfschichtige transparente Folie. Bei transparenten Folien kommen die Vorteile der erfindungsgemäß zu verwendende "coextrudierbare" Polymermasse hinsichtlich des Oberflächenglanzes, der Oberflächenspannung und der Oberflächenkratzempfindlichkeit zum Tragen. Bei der erfindungsgemäßen Polymermasse handelt es sich um ein Copolymer auf Basis von Methylmethacrylat und Methylacrylat (MMA/MA-Copolymer) mit einem für die Coextrusion üblichen Melt Flow Index (MFI) von 200 bis 2000 Pas, vorzugsweise 500 bis 1500 Pas, gemessen bei 190°C/1 Mpa und einer

$$\text{Uneinheitlichkeit } U = \frac{\overline{M}_w}{\overline{M}_n} - 1$$

$\overline{M}_w$ = mittlere Gewichtsmittel der Molmasse

$\overline{M}_n$ = mittlere Zahlenmittel der Molmasse von 0,4 bis 2,0, bevorzugt 0,8 bis 1,6.

Die erfindungsgemäß einzusetzende coextrudierbare Copolymermasse auf Basis von Methylmethacrylat und Methylacrylat wird vorzugsweise in einer Schichtdicke von 0,5 bis 3,0 μm, insbesondere 0,8 bis 1,7 μm bei Mehrschichtfolien angewendet.

Überraschenderweise ist es durch die Verwendung der erfindungsgemäßen coextrudierbaren Copolymermasse gelungen, den Oberflächenglanz, die Oberflächenspannung unter Beibehaltung guter Siegeleigenschaften wesentlich zu verbessern. Desweiteren war nicht zu erwarten, daß durch die Verwendung der erfindungsgemäßen coextrudierbaren MMA/MA-Copolymermasse die Verkratzbarkeit der biaxial gereckten Folien wesentlich verringert werden konnte.

In der bevorzugten Ausführungsform handelt es sich bei der Folie um eine fünfschichtige transparente Folie. Die Basisschicht, d. h. die von den beiden Zwischenschichten (B) eingeschlossene innenliegende Kernschicht (C), der Mehrschichtfolie ist aus Polypropylenpolymer, welches für diesen Anwendungszweck der Folienherstellung ein übliches Polymeres ist. Übliche Polymere sind z. B. Homopolymere, insbesondere isotaktisches Polypropylen mit einem n-Heptan löslichen Anteil von maximal 15 Gew.-% oder ein Copolymer des Propylens mit Ethylen oder $C_4$- bis $C_8$-Olefinen mit mindestens 90 Gew.-% Propylenanteil oder Polypropylen-Polyolefine, die unter Verwendung von Matallocen-Katalysatoren hergestellt wurden. Die üblichen Propylenpolymere der Basisschicht haben zweckmäßigerweise einen Schmelzflußindex (MFI) von 0,5 bis 8, inbesondere 1,5 bis 4 g/10 min bei 230 °C und 2,16 kp Belastung (DIN 53 735) und einen Schmelzpunkt von mindestes 140 °C, vorzugsweise 150 °C oder höher. Die Propylenpolymere besitzen üblicherweise eine Dichte von 0,9 bis 0,91 g/cm$^3$.

Die Zwischenschichten (B) werden üblicherweise als Haftvermittlerschicht zwischen den Außenschichten (A) und der innenliegenden Basisschicht (C) einer Mehrschicht-Polyolefinfolie eingesetz. Um die geforderten Eigenschaften der Zwischenschichten (B) als Haftvermittlerschicht zu gewährleisten, werden für die Zwischenschichten zahlreiche polyolefinische Materialien, vorzugsweise folgende eingesetzt:

- isotaktisches Polypropylen mit einem n-Heptan löslichen Anteil von maximal 15 Gew.-% gemäß des als Basisschichtmaterial beschriebenen Polypropylens

- $C_4$- bis $C_8$-Olefine mit mindestens 90 Gew.-% Propylenanteil

- Propylen/Ethylen-Copolymere

- Propylen/Buten-1-Copolymere

- Propylen/Ethylen/Buten-1-Terpolymere

- Propylen/Buten-1/Ethylen-Terpolymere

- Maleinsäureanhydried-gepfropfte Polyolefine auf Basis von Polypropylen, Polyethylen, Polybuten und Gemische aus genannten

- Polyolefine, die unter Verwendung von Metallocen-Katalysatoren hergestellt wurden

- sowie

- Mischungen aus mindestens zwei und/oder mehreren der vorstehenden Polymere.

Die Zwischenschichten (B) sind für die Anwendung als Haftvermittlerschicht vorzugsweise aus dem Material der jeweiligen Außenschicht (A), einem Polypropylen/Ethylen-Copolymeres, welches 90,0 bis 99,0 Gew.-% Polypropylen und 1,0 bis 10,0 Gew.-% eines Polyethylens enthält und eines MSA-gepfropften Haftvermittler auf Basis von Polypropylen/Ethylen-Copolymer aufgebaut. Diese Zwischenschichten (B) sind dadurch gekennzeichnet, daß sie einen Schmelzpunkt von 80 bis 150 °C, insbesondere 100 bis 140 °C, und einen Schmelzflußindex (MFI) von 2 bis 8, insbesondere 4 bis 6 g/10 min bei 230 °C und 2,16 kp Belastung (DIN 53 735) haben.

Die Ausrüstung der Schichten der Mehrschichtfolie mit weiteren allgemein üblichen Additiven und Hilfsmitteln in bewährten Mengen, wie z. B. Gleitmittel, Antistatika, Antiblockmitteln, ist möglich. Die üblichen Additive werden bei der Folienherstellung in Form von Masterbatches zugegeben. Unter dem Begriff Masterbatch ist eine Mischung aus dem Kunststoffrohstoff und einer hohen Menge an Additiv zu verstehen. Die Masterbatche können einzelne Additiv oder auch mehrere Additive enthalten. Bevorzugt werden Masterbatche mit mehreren Additiven auf Basis des jeweiligen Kunststoffrohstoffes, in die das Masterbatch eingearbeitet werden sollen. Die Wirkung allgemein bekannter Antistatika ist auf den hydrophilen Molekülteil, der mit dem langkettigen hydrophoben Kohlenwasserstoffrest verbunden ist, zurückzuführen. In den Folien richten sich die Molekülketten so aus, daß der hydrophile Teil an der Oberfläche der Folie Wasser anlagert kann, woraus eine Erniedrigung des Oberflächenwiderstandes resultiert, die letztlich die antistatische Wirkung ausmacht.

Bevorzugte Antistatika sind Alkali-alkansulfonate, polyethermodifizierte, das sind ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit zwei Hydroxyalkyl-$(C_1\text{-}C_4)$-Gruppen substituiert sind, worunter N,N-Bis-(2-hydroxethyl)-alkylamine mit $C_{10}$-$C_{20}$, vorzugsweise $C_{12}$-$C_{18}$ als Alkylgruppe besonders geeignet sind. Die wirksame Menge an Antistatika liegt im Bereich von 0,05 bis 3,0 Gew.-%, bezogen auf die jeweilige Schicht.

Als Gleitmittel werden üblicherweise höhere aliphatische Säureamide, höhere aliphatische Säureester, Wachse und Metallfette eingesetzt. Typische Beispiele sind Erucasäureamid und Ölsäureamid, dessen üblich wirksame Menge zwischen 0,1 und 0,2 Gew.-%, bezogen auf die jeweilige Schicht, liegen. Weiterhin werden Polymere aus der Gruppe der Polyalkylsiloxane eingesetzt.

Wie aus US 4,529,764 hervorgeht, werden weitere geeignete anorganische Zusätze für Polyolefinfolien als Antiblockmittel, wie z. B Siliciumdioxid, Talkum, Kalkstein, Calciumcarbonat, Tonerde, Kieselsäure, Zinkoxide, Magnesium Silikat, Aluminiumsilikat, Calciumphosphat und andere mehr, sowie mit dem Außenschichtmaterial unverträgliche, d. h. nicht mischbare Polymerisate, wie Polyamide, Polyester, Polycarbonate, Polymethylmethacrylat und dergleichen eingesetzt.

Üblicherweise werden Polyolefine durch Stabilisatoren gegen den thermischen Abbau während der Herstellung und der Verarbeitung zu z. B. Folien stabilisiert. Im EP-A-27 586 und der EP-A-263 882 werden bevorzugt stabilisierend wirkende Verbindungen und ihre Kombinationen für Ethylen-, Propylen- und anderen a-Olefinpolymeren beispielsweise beschrieben. Die für eine ausreichende Stabilisierung notwenige Menge beträgt im allgemeinen 0,1 bis 2,0 Gew.-% bezogen auf die jeweilige Schicht.

Die erfindungsgemäßen Folien können nach bekannten Verfahren wie Laminierung, Beschichtung oder Schmelzecoextrusion hergestellt werden. Nach der Extrusion und der Verfestigung des Dickfilms auf der Gießwalze und/oder im Wasserbad und/oder einer Kombination aus beiden wird der Film mindesten monoaxial, bevorzugt biaxial gereckt. Dabei wird der Film in Laufrichtung (längs) in einem Verhältnis von 4:1 bis 7:1, vorzugsweise 5:1 bis 6:1 bei einer Temperatur von 120 °C bis 150 °C gereckt. Das Reckverhältnis quer zur Laufrichtung des Films (Querreckverhältnis) liegt in einem Bereich von 8:1 bis 12:1, bevorzugt 9:1 bis 11:1 und das Querrecken des Films wird bei einer Temperatur zwischen 130 °C und 170 °C vorgenommen. Dem biaxialorientierenden Prozeß (Längs- und Querstreckung) schließt sich eine thermische Fixierung des Films an. Die Thermofixierung wird üblicherweise bei 1 °C bis 40 °C unter der Querrecktemperatur durchgeführt.

Nach Fertigstellung des erfindungsmäßigen Films liegt eine Foliengesamtdicke von 8 bis 50 µm vor. Die Zwischenschichtdicken einer Mehrschichtfolie, fünfschichtige Folie bevorzugt, sind zwischen 0,3 bis 1,5 µm, vorzugsweise zwischen 0,6 und 1,2 µm.

Die erfindungsgemäßen Folien eignen sich, bedingt durch die geringe Oberflächenverkratzbarkeit und hoher Oberflächenpolarität besonders für die Kaschierung, insbesondere der Hochglanzkaschierung graphischer Produkte, wie Bucheinbände, Prospekteinbände, Buchhüllen, Schallplattenhüllen, Verpackungen u. a. m.. Darüberhinaus sind die erfindungsgemäßen Folien aufgrund ihrer hohen Oberflächenpolarität und dem hohen Oberflächenglanz mit gutem Siegelverhalten auch als Verbundfolie als Einschlagfolie einsetzbar.

**Beispiel 1**

Mittels des oben beschriebenen Coextrusionsverfahrens wird eine fünfschichtige biaxial orientierte Polypropylenfolie mit dem Aufbau A/B/C/B/A (Außenschicht A, Zwischenschicht B und Kernschicht = Basisschicht C) mit den bevorzugten Reckverhältnissen (längs 4,8:1 und quer 9,6:1), einer mittleren Längsrecktemperatur von 145 °C und einer mittleren Querrecktemperatur von 165 °C hergestellt. Die coextrudierte Folie hat eine Gesamtdicke von 20 µm, dessen Aufbau nachfolgend beschrieben ist:

Außenschicht A:

Dicke:          1 µm

Material:       100 Gew.-% der erfindungsmäßigen Copolymermasse auf Basis von Methylmethacrylat (MMA) und Methylacrylat (MA) mit einem Comonomerverhältnis 50 : 50, einer Schmelzeviskosität von 582 Pas bei 190°C/1Mpa, einem mittleren Gewichtsmittel $\overline{M_w}$ von 54.500, einem mittleren Zahlenmittel $\overline{M_n}$ von 22.300 und die sich daraus ergebende Uneinheitlichkeit von 1,44.

Zwischenschicht B:

Dicke:          1 µm

Material:       100 Gew.-% eines Maleinsäureanhydrid-gepfropften Haftvermittler auf Basis von Polypropylen/Ethylen-Copolymer mit der Bezeichnung Admer QF 551 E der Firma Mitsui Sekka, Japan mit einem MFI von ca. 5 g/10 min bei 230 °C und einer Belastung von 2,16 N nach DIN 53 735.

Basisschicht C:

Material:       100 Gew.-% eines Polypropylenpolymeren mit einer Dichte von 0,91 g/cm$^3$ und einem Schmelzflußindex von 3,3 g/10 min bei 230 °C und einer Belastung von 2,16 N nach DIN 53 735 bestimmt.

**Beispiel 2**

Es wurde eine Folie nach dem im Beispiel 1 beschriebenen Verfahren gefertigt, jedoch änderte sich die Rohstoffauswahl wie folgt:

Außenschicht A:

Dicke:          1 µm

Material:       100 Gew.-% der erfindungsmäßigen Copolymermasse auf Basis von Methylmethacrylat (MMA) und Methylacrylat (MA) mit einem Comonomerverhältnis 40 : 60, einer Schmelzeviskosität von 278 Pas bei 190°C/1Mpa, einem mittleren Gewichtsmittel $\overline{M_w}$ von 123.000, einem mittleren Zahlenmittel $\overline{M_n}$ von 69.000 und die sich daraus ergebende Uneinheitlichkeit von 0,78.

Zwischenschicht B:

Dicke: 1 µm

Material: 100 Gew.-% eines Maleinsäureanhydrid-gepfropften Haftvermittler auf Basis von Polypropylen/Ethylen-Copolymer mit der Bezeichnung Admer QF 551 E der Firma Mitsui Sekka, Japan mit einem MFI von ca. 5 g/10 min bei 230 °C und einer Belastung von 2,16 N nach DIN 53 735.

Basisschicht C:

Material: 100 Gew.-% eines Polypropylenpolymeren mit einer Dichte von 0,91 g/cm$^3$ und einem Schmelzflußindex von 3,3 g/10 min bei 230 °C und einer Belastung von 2,16 N nach DIN 53 735 bestimmt.

**Vergleichsbeispiel 1**

Außenschicht A:

Dicke: 1 µm

Material: Heißsiegelmasse, wie in EP 0 255 622 A3 beschrieben

Basisschicht C:

Material: 100 Gew.-% eines Polypropylenpolymeren mit einer Dichte von 0,91 g/cm$^3$ und einem Schmelzflußindex von 3,3 g/10 min bei 230 °C und einer Belastung von 2,16 N nach DIN 53 735 bestimmt verwendet.

**Vergleichsbeispiel 2**

Außenschicht A:

Dicke: 1 µm

Material: Formmasse, wie in EP 0 027 586 A1 beschrieben

Basisschicht C:

Material: 100 Gew.-% eines Polypropylenpolymeren mit einer Dichte von 0,91 g/cm$^3$ und einem Schmelzflußindex von 3,3 g/10 min bei 230 °C und einer Belastung von 2,16 N nach DIN 53 735 bestimmt verwendet.

**Vergleichsbeispiel 3 (MB 668 der Fa. Mobil)**

Es handelt sich in diesem Vergleichsbeispiel 3 um eine handelsübliche acryllackierte BOPP-Folie der Fa. Mobil, dessen Aufbau nach Herstellerangaben wie folgt ist:

Aufbau: A/C/B

Schicht A: Acryllackierung auf Wasserbasis

Schicht C: OPP

Schicht B: LTS-Lackierung

In der Tabelle 1 sind die Eigenschaften der drei- und fünfschichtigen biaxial orientierten Folien der Beispiele und Vergleichsbeispiele zusammengefaßt dargestellt.

Die Überlegenheit der erfindungsgemäß hergestellten Mehrschichtfolien entsprechend der Beispiele 1 und 2 bezüglich des Oberflächenglanzes, der Oberflächenverkratzbarkeit, der Oberflächenspannung, der Siegelanspringtemperatur und der Siegelnahtfestigkeit geht aus der Tabelle 1 hervor. Besonders positiv ist bei der Verwendung des erfindungsgemäß coextrudierbaren MMA/MA-Copolymeres, daß die Oberflächenkratzempfindlichkeit und die Oberflächenspannung und somit die Benetzbarkeit gleich und besser sind als von der acryllackierten Folie gemäß Vergleichsbeispiel 3.

Tabelle 1

| | Glanz, 20° | Kratzempfind- lichkeit 1) | Oberflächens- pannung 2) | Siegelanspringtem- peratur 2) | Siegelnahtfestigkeit 2) Ts=85/90/9 5°C |
|---|---|---|---|---|---|
| Einheiten | GE | % | mN/m | °C | N/15mm |
| **Beispiel 1** | > 114 | 15,6 | 38 | 95 | 0/0,1/0,6 |
| **Beispiel 2** | > 124 | 18,2 | 40 | 90 | 0/0,5/1,0 |
| **Vergleichsbeispiel 1** | 95 | 23,1 | < 32 | 90 | 0,1/0,8/1,4 |
| **Vergleichsbeispiel 2** | 105 | 25,2 | < 32 | 115 | 0/0/0 |
| **Vergleichsbeispiel 3** | 131 | 18,9 | 38 | < 85 | 2,1/2,6/2,4 |

1) Mittelwert aus Verkratzung der Seite a und Seite b
2) Siegelschichtseite, d. h. nicht corona vorbehandelt

**Prüfmethoden**

Glanz, 20°

Die Glanzmessung 20° wird in Anlehnung an die DIN 67 530 durchgeführt. Als Glanz wird der regulär reflektierte Lichtanteil, bezogen auf einen unter 20° zum Lot einfallenden Lichtstrahl bezeichnet. Der Glanz wird in Glanzeinheiten GE angegeben, die auf einen Schwarzglasstandard bezogen werden. Der Wert des Oberflächenglanzes sollte möglichst hoch sein.

Kratzfestigkeit

Die Kratzfestigkeit der Folien wurde mittels eines Berieselungsgerätes bestimmt. Die zu prüfende Folie wird in den Probehalter eingespannt, die Trübung gemessen und auf der Berieselungsplatte fixiert. Dann läßt man 42 g = 25 ml Siliciumcarbid Carbogran Dunkel Makrokorn F 120 (Lonza) aus 30 mm Höhe durch die Apparatur (Durchlasöffnungsdurchmesser 4 mm) auf die Probe, die in 45° zur Senkrechten unterhalb der Durchlasöffnung fixiert ist, rieseln und mißt die nun resultierende Trübung. Es wird die Erhöhung der Trübungswerte als Verkratzbarkeit angegeben.

Oberflächenspannung:

Die Oberflächenspannung wird mittels des WT-Tests (Wetting Tension Test) nach DIN 53 364 (ASTM D 2587, ISO 8296) geprüft. Unter dem WT-Test versteht man die Benetzbarkeit einer Folie mit einer Prüftinte mit definierter Oberflächenspannung. Sie gibt eine Aussage über die Oberflächenpolarität an und sie wird in mN/m (dyn) angegeben.

Siegelnahtfesfigkeit

Unter Siegelnahtfestigkeit wird die Kraft verstanden, die notwendig ist, zwei Folien, die unter definierten Bedingungen (Siegeldruck: 1N/cm², Siegelzeit: 0,5 sec und glatte Siegelbacken) und den in der Tabelle 1 angegebenen Siegeltemperaturen hergestellte Siegelnaht, senkrecht zur Siegelnaht in Folienlaufrichtung zu trennen. Die Siegelnahtfestigkeit wird mittels einer Zugfestigkeitsprüfmaschine an 15 mm breiten Streifen ermittelt, und die Festigkeit wird in N/15mm angegeben.

**Patentansprüche**

1.  Wenigstens monoaxial gereckte coextrudierte siegelbare Mehrschicht-Polypropylenfolie, mit mindestens einer Außenschicht bestehend aus einer Copolymermasse, die dadurch gekennzeichnet ist, daß sie auf Basis von Methylmethacrylat (MMA) und Methylacrylat (MA) aufgebaut ist und das Copolymer eine Uneinheitlichkeit von 0,4 bis 2, bevorzugt 0,8 bis 1,6 aufweist.

2. Folie nach Anspruch 1, dadurch gkennzeichnet, daß die MMA/MA-Copolymermasse einen Melt Flow Index (MFI) von 200 bis 2000 Pas, vorzugsweise 500 bis 1500 Pas, gemessen bei 190°C/1 Mpa besitzt.

3. Folie nach Anspruch 1 und/oder 2, dadurch gekennzeichnet, daß die MMA/MA-Copolymeraußenschicht/en extrudiert ist/sind.

4. Folie nach einem oder mehreren Anspüchen 1 bis 3, dadurch gekennzeichnet, daß die MMA/MA-Copolymerfolienaußenschichten nicht flamm- oder plasma- oder coronavorbehandelt sind.

5. Folie nach einem oder mehreren Anspüchen 1 bis 4, dadurch gekennzeichnet, daß die Folie eine Zwischenschicht zwischen dem Kern und der MMA/MA-Copolymeraußenschicht/en besitzt/besitzen.

6. Folie nach einem oder mehreren Anspüchen 1 bis 5, dadurch gekennzeichnet, daß die Zwischenschicht/en eine mittlere Dicke von 0,3 bis 1,5 bevorzugt 0,6 bis 1,2 µm besitzt/besitzen.

7. Folie nach einem oder mehreren Anspüchen 1 bis 6, dadurch gekennzeichnet, daß die MMA/MA-Copolymeraußenschicht/en eine mittlere Dicke von 0,5 bis 3,0, bevorzugt 0,8 bis 1,7 µm besitzt/besitzen.

8. Folie nach einem oder mehreren Anspüchen 1 bis 7, dadurch gekennzeichnet, daß die Zwischenschicht/en 0,1 bis 10 Gew.-%, bevorzugt 0,5 bis 5 Gew.-% MMA/MA-Copolymermasse enthält/enthalten.

9. Folie nach einem oder mehreren Anspüchen 1 bis 8, dadurch gekennzeichnet, daß die Zwischenschicht/en Maleinsäureanhydrid-gepfropfte Haftvermittler enthält/enthalten.

10. Folie nach einem oder mehreren Anspüchen 1 bis 9, dadurch gekennzeichnet, daß die Folie im Vakuum mit einem Element oder den Oxiden eines Elementes der ersten bis vierten Haupt- und Nebengruppe des Periodensystems bedampfbar ist.

11. Folie nach einem oder mehreren Anspüchen 1 bis 10, dadurch gekennzeichnet, daß die Folie mit oder ohne Gleit-und/oder Antistatikmittel ausgestattet ist.

12. Folie nach einem oder mehreren Anspüchen 1 bis 11, dadurch gekennzeichnet, daß die Folienaußenschichten mit und/oder ohne Antiblockmittel ausgestattet ist.

13. Folie nach einem oder mehreren Anspüchen 1 bis 12, dadurch gekennzeichnet; daß die Folie transparent ist.

14. Verwendung der Folie nach einem oder mehreren Anspüchen 1 bis 13 als Solo- und/oder Verbundfolienkompo-nente zu Verpackungszwecken.

**Europäisches Patentamt**

# EUROPÄISCHER RECHERCHENBERICHT

Nummer der Anmeldung

EP 96 10 1590

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DATABASE WPI<br>Section Ch, Week 7516<br>Derwent Publications Ltd., London, GB;<br>Class A32, AN 75-26728W<br>XP002001209<br>& JP-B-50 007 100 (MITSUBISHI RAYON CO) ,<br>20.März 1975<br>* Zusammenfassung *<br>--- | 1,3,14 | B32B27/08 |
| A | EP-A-0 464 921 (AVERY DENNISON COMPANY)<br>8.Januar 1992<br>* Seite 2, Zeile 30 - Seite 3, Zeile 45;<br>Beispiel V *<br>--- | 1,3-5,<br>13,14 | |
| A | US-A-4 536 453 (MAURI LUIGI  ET AL)<br>20.August 1985<br>* Ansprüche 1,4 *<br>----- | 1,14 | |

**RECHERCHIERTE SACHGEBIETE (Int.Cl.6)**

B32B

Der vorliegende Recherchenbericht wurde für alle Patentansprüche erstellt

| Recherchenort | Abschlußdatum der Recherche | Prüfer |
|---|---|---|
| DEN HAAG | 25.April 1996 | Ibarrola Torres, O |

EPO FORM 1503 03.82 (P04C03)